# FASCICULE DE BREVET EUROPEEN

(11) **EP 0 980 489 B1**
(45) Date de publication et mention de la délivrance du brevet: **11.04.2001**
(21) Numéro de dépôt: 99937974.6
(22) Date de dépôt: 25.02.1999
(51) Int. Cl.: F16L 57/00

(54) **DISPOSITIF DE PROTECTION POUR CONDUITE DEPOSEE EN PARTIE SUR UN FOND MARIN**
SCHUTZVORRICHTUNG FÜR EINE AM SEEBODEN TEILWEISE VERLEGTE ROHRLEITUNG
PROTECTIVE DEVICE FOR PIPE PARTIALLY LAID ON THE SEAFLOOR

(30) Priorité: 03.03.1998 FR 9802549
(43) Date de publication de la demande: 23.02.2000
(73) Titulaire: COFLEXIP, 75116 Paris (FR)
(72) Inventeur: RODRIGUES, Serta, Rio de Janeiro, RJ (BR); ARCHAMBAUD, Denis, F-75011 Paris (FR)
(74) Mandataire: Levy, David
(86) Numéro de dépôt international: FR9900427
(87) Numéro de publication internationale: WO9945309

(56) Documents cités:
- WO-A-93/16314
- DE-A- 3 150 881
- FR-A- 556 897
- FR-A- 2 505 566

## Description

La présente invention concerne un dispositif de protection pour conduite déposée en partie sur un fond marin, et plus particulièrement, pour conduite reliant une installation de surface à un équipement de fond tel qu'une tête de puits ou un collecteur (manifold en anglais).

Les conduites reliant une installation de surface à un équipement de fond présentent des configurations diverses et variées, comme celles dites librement suspendue (free hanging en anglais), Lazy S, Lazy wave, etc. Ces configurations sont décrites et représentées dans le document de l'American Petroleum Institute (API), First Edition, June 1, 1988 et intitulé "API Recommended Practice 17B".

Lorsque la conduite rigide ou flexible, reliant une installation de surface et un équipement de fond, comprend une partie reposant sur le fond marin, cette partie d' appui peut être amenée à se déplacer sur le fond marin en fonction des variations de positionnement de l'installation de surface.

Tant que l'installation de surface se déplace dans des directions qui sont sensiblement parallèles à la direction de la partie d'appui de la conduite, le frottement, très faible, de ladite partie sur le fond n'engendre pratiquement pas de dégâts sur la gaine externe d'étanchéité de la conduite en raison du fait que la longueur de la conduite est calculée pour tenir compte de ces déplacements de l'installation de surface.

Par contre, lorsque la même installation de surface se déplace dans des directions non parallèles à la partie d'appui, cette dernière suit les mouvements de ladite installation de surface en se déformant en conséquence. Ces déplacements de la partie d'appui entraînent l'érosion ou creusent le fond marin sur une certaine épaisseur qui peut atteindre un mètre ou davantage lorsque la première couche du fond marin est du sable.

Par suite des déplacements répétés de la partie d'appui, la couche sous-jacente à ladite première couche de sable est mise à nu. Or, dans certaines régions d'exploitation pétrolière, comme au large du Brésil, la couche sous-jacente est constituée par des coraux ou tout autre terrain du type abrasif. Le frottement du revêtement de protection de la conduite sur les coraux entraîne rapidement la destruction, au moins partielle, dudit revêtement avec les conséquences que les spécialistes connaissent bien, comme par exemple, la déformation en cage d'oiseau des nappes d'armures, laquelle déformation étant irréversible, il s'ensuit que la conduite est hors d'usage et qu'il faut procéder à son remplacement.

De tels remplacements de conduite sont extrêmement coûteux, non seulement en raison du prix de la conduite proprement dite mais également en raison de l'arrêt de production, des équipements nécessaires aux remplacements, etc.

Dans les demandes de brevet GB-A-2 260 590 et GB-A-2 276 694, des dispositifs sont décrits et représentés pour protéger des conduites flexibles reposant sur un fond marin ou enterrées. Ces dispositifs sont constitués par plusieurs sections identiques connectées, les unes aux autres, pour constituer une protection continue sur une longueur prédéterminée de ladite conduite flexible. Les moyens de liaison entre les demi-coquilles constituant les sections, sont prévus de telle sorte qu'un jeu soit ménagé dans la mortaise de manière à autoriser une certaine flexibilité longitudinale des dispositifs.

Toutefois, ces dispositifs sont fixes par rapport à la conduite à protéger et en raison de la matière utilisée, le polyuréthane, ne résisteraient pas longtemps à l'abrasion provoquée par le frottement sur une surface dure telle que des coraux ou du type abrasif. De plus, ils sont conçus pour protéger la conduite des agressions externes, en particulier celles qui pourraient provenir des machines de creusement ou d'excavation comme les ensouilleuses qui sont généralement utilisées dans de faibles profondeurs d'eau.

Dans ce qui suit, il sera fait référence à une conduite flexible mais il est entendu que la présente invention pourra être mise en oeuvre pour tout autre type de conduite immergée telle qu'un riser rigide dont le revêtement de protection est constitué par une peinture anti-corrosion. En général, la présente invention concerne des conduites comportant un revêtement externe susceptible d'être endommagé par des frottements sur une surface dure et/ou du type abrasif.

La présente invention a pour but de proposer un dispositif de protection pour conduite flexible reliant une installation de surface à un équipement de fond et comportant une partie d'appui susceptible de se déplacer sur le fond marin.

Un objet de la présente invention est un dispositif de protection qui est caractérisé en ce qu'il est constitué par au moins un élément de protection disposé autour d'au moins une portion de la partie à protéger de la conduite flexible, ledit élément de protection étant monté à rotation libre autour de ladite portion.

Un avantage de la présente invention réside dans le fait que la partie de conduite qui était habituellement en contact avec le fond marin est protégée par l'élément de protection, ce dernier subissant les frottements du fond marin ou de la couche sous-jacente qui peut être constituée par des coraux.

Un autre avantage est que l'élément de protection est libre en rotation, ce qui lui permet de rouler sur le sable du fond marin ou sur les coraux sous-jacents, de sorte que les frottements sont fortement réduits.

Selon une autre caractéristique, l'élément de protection est constitué par plusieurs olives en deux parties, chaque partie reposant librement par ses extrémités sur des épaulements de colliers interposés entre deux olives consécutives.

De ce fait, le changement, après usure, d'une ou plusieurs olives est très facile à réaliser.

D'autres avantages et caractéristiques ressortiront mieux à la lecture de la description d'un mode de réalisation de la présente invention, ainsi que des dessins annexés sur lesquels :

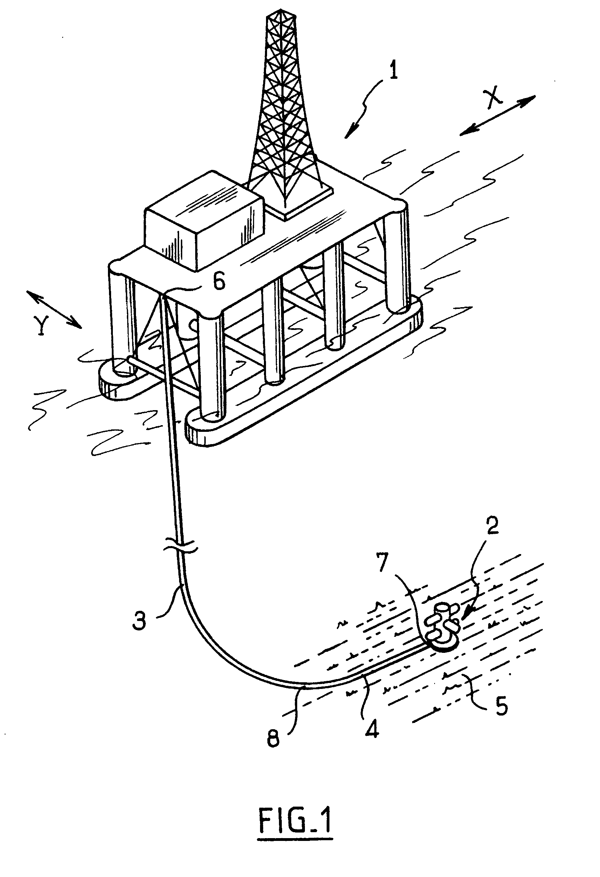

- la figure 1 est une vue schématique d'une conduite flexible reliant une installation de surface à un équipement de fond ;
- la figure 2 est une vue partielle en coupe du dispositif de protection selon l'invention.

Une installation de surface constituée, par exemple, par une plate-forme de production 1, est reliée à un équipement de fond, tel qu'une tête de puits 2, par une conduite flexible 3. Dans l'exemple représenté, la conduite flexible 3 présente une configuration dite librement suspendue mais elle pourrait présenter une autre configuration dans laquelle une partie 4 de ladite conduite flexible 3 repose sur le fond marin 5. Dans certaines régions d'exploitation, comme par exemple au large du Brésil, les premières couches du fond marin sont constituées par une couche superficielle de sable et au moins une couche sous-jacente dure telle qu'une couche de coraux.

Lorsque l'installation de surface 1 se déplace dans des directions X sensiblement parallèles à la partie de conduite 4, cette dernière frotte peu sur le fond marin 5 car la longueur totale de la conduite flexible entre les extrémités de fixation 6 et 7 est prévue pour absorber ces déplacements.

Par contre, lorsque la même installation de surface 1, se déplace dans d'autres directions, par exemple dans des directions Y perpendiculaires aux directions X, la partie de conduite 4 est déplacée suivant des trajets dont certains sont des arcs de cercle centrés sur l'extrémité de fixation 7. A chaque déplacement de la partie de conduite 4, une partie du fond marin est enlevée par suite du frottement de ladite partie de conduite 4 sur le fond marin 5.

Le dispositif selon l'invention est destiné à protéger au moins une portion de ladite partie de conduite 4 et, de préférence, toute la partie de conduite 4 et même au-delà, par exemple jusqu'à l'amorce 8 de la courbure de conduite qui, en principe, ne repose pas sur le fond marin.

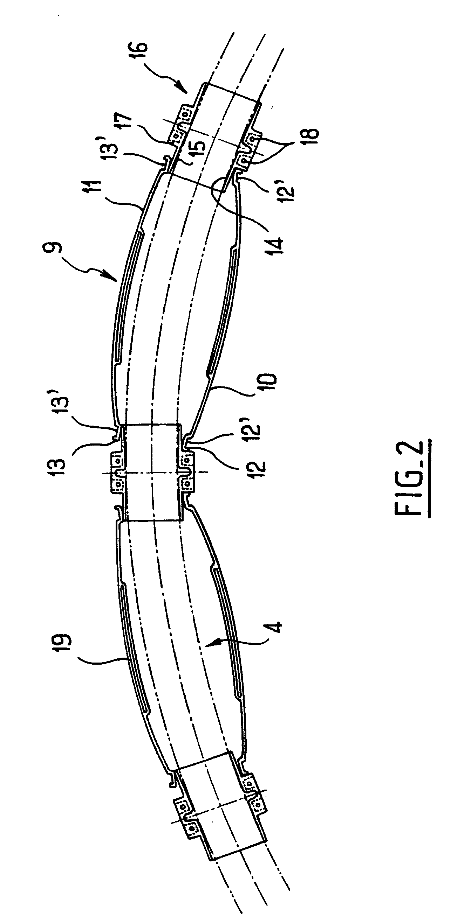

Le dispositif représenté partiellement sur la figure 2 comprend au moins un élément de protection qui, dans une forme préférée de réalisation, est constituée par une olive 9 qui est libre en rotation autour de la partie de conduite 4 à protéger. Chaque olive 9 est constituée, de préférence, par deux demi-olives 10, 11. Chaque demi-olive 10, 11 comprend, aux extrémités 12', 13', des zones 12, 13 qui reposent sur des épaulements 14, 15 de colliers de support 16 qui sont fixés sur la conduite et qui sont interposés entre deux olives consécutives 9. Les zones 12, 13 reposent librement sur les épaulements 14, 15 où présentent un léger jeu avec lesdits épaulements. Le jeu qui peut être ménagé en regard des zones d'appui 12, 13 et des épaulements 14, 15 est, par exemple, compris entre 3 et 5 % du diamètre intérieur de l'olive, mesuré au droit desdites zones d'appui 12, 13. Le jeu entre les zones d'appui et les épaulements permet, outre la rotation de l'olive, le passage de l'eau entre l'olive et la conduite flexible pour chasser l'air qui pourrait être emprisonné et l'eau au cours de la remontée de la conduite flexible. Pour remplir ces fonctions de purge d'air et d'eau, on peut également prévoir des petits trous ménagés dans chacune des demi-olives. Chaque épaulement 14, 15 présente une longueur suffisante pour que la courbure maximum que peut adopter la partie de conduite 4, ne permette pas aux extrémités 12', 13' de se détacher des épaulements 14, 15. Dans l'exemple de la figure 2, on constate que les zones d'appui 12 de la demi-olive 10 sont en appui sur des rebords 17 du collier alors que les zones d'appui 13 de la demi-olive 11 sont appui sur le bord libre des épaulements 15 mais sans se détacher du collier 16 et ce, malgré la courbure de la partie de conduite 4, ladite courbure pouvant atteindre jusqu'à 3 m de rayon pour des conduites de 2 à 16 pouces de diamètre interne. Les essais effectués montrent qu'une longueur des épaulements 14, 15, comprise entre 80 et 100 mm était suffisante pour maintenir les extrémités des olives sur les épaulements correspondants des colliers support. Chaque collier de support 16 est, de préférence, également constitué en deux parties qui sont reliées ensemble par des moyens appropriés tels que des boulons 18, étant entendu que chaque collier est solidaire de la conduite pour qu'il ne puisse ni coulisser ni tourner par rapport à la conduite flexible.

Le nombre d'olives 9 dépend essentiellement de la longueur de la partie de conduite 4 à protéger et la longueur de chaque olive peut être variable ou constante dans un même dispositif. Une longueur de 1 m pour chaque olive est une dimension adéquate.

La liaison entre les demi-olives 10, 11 d'une olive 9 peut être effectuée par tout moyen approprié tel que tenon et mortaise qui seraient prévus sur les faces en regard des demi-olives à assembler.

De manière à éviter tout déplacement relatif entre le dispositif de protection et la conduite flexible, il est préférable de prévoir un collier de support 16 solidaire d'un organe qui est habituellement monté à l'extrémité 7 de la conduite flexible 3, en vue du raccordement avec la tête de puits 2. Le dernier collier de support situé à l'extrémité du dispositif, du côté de la zone 8, peut être serré fortement sur la conduite flexible 3 de manière à empêcher le déplacement relatif bien que cela ne soit pas nécessaire dès lors que le collier situé du côté de l'extrémité 7 est fixe.

Les demi-olives 10, 11 peuvent éventuellement comporter des zones de renfort 19 comme celles représentées sur la figure 2.

Lorsque le dispositif selon l'invention est monté sur la partie de conduite 4 à protéger, cette dernière n'est plus en contact avec le fond marin. En effet, ce sont les olives 9 qui reposent sur le fond marin du fait que leur diamètre externe est supérieur au diamètre externe des colliers de support qui restent fixes, les olives 9 tournant librement sur les épaulements 14, 15, chaque fois que la partie de conduite 4 est déplacée par suite des déplacements latéraux de l'installation de surface 1, dans des directions sécantes aux directions X.

Enfin, chaque olive est réalisée dans un matériau relativement résistant, comme par exemple un composite en verre époxy ou un métal léger mais résistant.

Dans ce qui précède, il est fait référence à une protection sensiblement continue de la portion 4 de la partie à protéger de la conduite, cette dernière pouvant être du type flexible ou rigide. Il va de soi qu'il serait possible, sans sortir de la portée de la présente invention, de réaliser une protection discontinue. Par exemple, il serait possible de ménager un espace libre entre deux colliers fixes consécutifs qui ne serait pas protégé par une olive. Bien entendu, l'espace libre serait de longueur inférieure à celle de chaque olive, de manière à éviter le plus possible un frottement important provoqué par l'introduction de la première couche du fond marin entre lesdits colliers consécutifs lors du déplacement de la conduite. En raison de la différence de diamètre existant entre les olives et les colliers de support, on est assuré que les espaces dépourvues de protection ne seront pas en contact avec la sous-couche dure.

## Revendications

1. Dispositif de protection pour conduite (3) du type comprenant au moins un élément de protection (9) disposé autour d'au moins une portion de la partie (4) à protéger de la conduite (3), caractérisé en ce que ledit élément de protection (9) étant monté à rotation libre autour de ladite portion.

2. Dispositif selon la revendication 1, caractérisé en ce qu'il comprend plusieurs éléments de protection (9) disposés sur la longueur de la partie (4) à protéger de la conduite.

3. Dispositif selon la revendication 1 ou 2, caractérisé en ce que chaque élément de protection (9) est constitué par une olive dont les extrémités (12, 13) prennent appui librement sur des épaulements (14, 15) d'un collier de support (16) fixé autour de la partie (4) à protéger de la conduite (3).

4. Dispositif selon la revendication 3, caractérisé en ce que chaque olive (9) est constituée par deux demi-olives (10, 11), chaque demi-olive (10, 11) comportant à chaque extrémité (12, 13) une zone d'appui libre sur un épaulement dudit collier de support.

5. Dispositif selon l'une des revendications 3 ou 4, caractérisé en ce que le diamètre externe maximum de l'olive (9) est supérieur au diamètre externe maximum dudit collier de support (16).

6. Dispositif selon l'une des revendications 3 à 5, caractérisé en ce que la longueur de chaque épaulement (14, 15) du collier de support (16) est déterminée pour que la zone d'appui correspondante de l'olive reste en contact sur ledit épaulement quelle que soit la courbure imposée à ladite partie à protéger de la conduite.

7. Dispositif selon l'une des revendications 3 à 6, caractérisé en ce que la longueur totale de chaque olive est sensiblement égale à un mètre.

8. Dispositif selon l'une des revendications 3 à 7, caractérisé en ce que la longueur de chaque épaulement (14, 15) du collier de support (16) est comprise entre 80 et 100 mm.

9. Dispositif selon l'une des revendications 3 à 8, caractérisé en ce qu'un léger jeu est ménagé entre les faces en regard des zones d'appui et des épaulements, ledit jeu étant compris entre 3 et 5 % du diamètre intérieur de ladite olive, compté au droit des zones d'appui d'extrémité.

10. Dispositif selon l'une des revendications 3 à 9, caractérisé en ce que chaque collier de support (16) est en deux parties fixables l'une à l'autre.

11. Dispositif selon la revendication 1, caractérisé en ce que l'élément de protection est constitué par au moins un cylindre creux disposé autour de la partie à protéger de la conduite.

12. Dispositif selon l'une des revendications 1 à 11, caractérisé en ce que la conduite est protégée sur une longueur qui est supérieure à la longueur de la partie à protéger de ladite conduite.

## Patentansprüche

1. Schutzvorrichtung für eine Rohrleitung (3) mit wenigstens einem Schutzelement (9), das wenigstens einen Abschnitt eines zu schützenden Teils (4) der Rohrleitung (3) umschließt,
**dadurch gekennzeichnet, daß**
das Schutzelement (9) frei drehbar um den Abschnitt angeordnet ist.

2. Vorrichtung nach Anspruch 1 mit einer Mehrzahl von Schutzelementen (9), die entlang des zu schützenden Teils (4) der Rohrleitung angeordnet sind.

3. Vorrichtung nach Anspruch 1 oder 2, wobei jedes Schutzelement (9) olivenförmig ausgebildet ist und seine Enden (12, 13) auf zylindrischen Enden (14, 15) einer Trägermanschette (16) frei aufliegen, die den zu schützenden Teil (4) der Rohrleitung (3) in fester Anordnung umgreift.

4. Vorrichtung nach Anspruch 3, wobei jedes Schutzelement (9) aus zwei Hälften (10, 11) besteht und jede Hälfte (10, 11) an jedem Ende (12, 13) ein Anschlußende aufweist, das auf einem zylindrischen Ende der Trägermanschette frei aufliegt.

5. Vorrichtung nach Anspruch 3 oder 4, wobei der größte äußere Durchmesser des Schutzelements (9) größer als der größte äußere Durchmesser der Trägermanschette (16) ist.

6. Vorrichtung nach einem der Ansprüche 3 bis 5, wobei die Länge jedes zylindrischen Endes (14, 15) der Trägermanschette (16) so gewählt ist, daß das entsprechende Anschlußende des Schutzelements bei einer beliebigen Krümmung des zu schützenden Teils der Rohrleitung in Kontakt mit dem zylindrischen Ende bleibt.

7. Vorrichtung nach einem der Ansprüche 3 bis 6, wobei die Gesamtlänge jedes Schutzelements in etwa einen Meter beträgt.

8. Vorrichtung nach einem der Ansprüche 3 bis 7, wobei die Länge jedes zylindrischen Endes (14, 15) der Trägermanschette (16) zwischen 80 und 100 mm beträgt.

9. Vorrichtung nach einem der Ansprüche 3 bis 8, wobei ein geringes Spiel zwischen den gegenüberliegenden Oberflächen der Anschlußenden und der zylindrischen Enden besteht und das Spiel zwischen 3 und 5 % des Innendurchmessers des Schutzelements im Bereich der Anschlußenden beträgt.

10. Vorrichtung nach einem der Ansprüche 3 bis 9, wobei die Trägermanschette aus zwei miteinander verbindbaren Teilen besteht.

11. Vorrichtung nach Anspruch 1, wobei das Schutzelement aus wenigstens einem hohlen Zylinder besteht, der den zu schützenden Teil der Rohrleitung umschließt.

12. Vorrichtung nach einem der Ansprüche 1 bis 11, wobei ein Teil der Rohrleitung geschützt ist, der länger als der zu schützende Teil der Rohrleitung ist.

## Claims

1. Protection device for a pipe (3), of the type comprising at least one protection element (9) placed around at least one portion of that part (4) of the pipe (3) which is to be protected, characterized in that the said protection element (9) is mounted so as to rotate freely about the said portion.

2. Device according to Claim 1, characterized in that it comprises several protection elements (9) placed along the length of that part (4) of the pipe which is to be protected.

3. Device according to Claim 1 or 2, characterized in that each protection element (9) consists of an olive, the ends (12, 13) of which bear freely against shoulders (14, 15) of a support collar (16) fastened around that part (4) of the pipe (3) which is to be protected.

4. Device according to Claim 3, characterized in that each olive (9) consists of two half-olives (10, 11), each half-olive (10, 11) having, at each end (12, 13), a region which rests freely on a shoulder of the said support collar.

5. Device according to either of Claims 3 and 4, characterized in that the maximum external diameter of the olive (9) is greater than the maximum external diameter of the said support collar (16).

6. Device according to one of Claims 3 to 5, characterized in that the length of each shoulder (14, 15) of the support collar (16) is determined so that the corresponding bearing region of the olive remains in contact on the said shoulder whatever the curvature imposed on the said part of the pipe which is to be protected.

7. Device according to one of Claims 3 to 6, characterized in that the total length of each olive is approximately equal to one metre.

8. Device according to one of Claims 3 to 7, characterized in that the length of each shoulder (14, 15) of the support collar (16) is between 80 and 100 mm.

9. Device according to one of Claims 3 to 8, characterized in that a small gap is left between the opposing faces of the bearing regions and the shoulders, the said gap being between 3 and 5% of the internal diameter of the said olive, measured perpendicular to the end bearing regions.

10. Device according to one of Claims 3 to 9, characterized in that each support collar (16) is made in two parts which can be fixed together.

11. Device according to Claim 1, characterized in that the protection element consists of at least one hollow cylinder placed around that part of the pipe which is to be protected.

12. Device according to one of Claims 1 to 11, characterized in that the pipe is protected over a length which is greater than the length of that part of the said pipe which is to be protected.
